# EUROPÄISCHE PATENTANMELDUNG

(11) **EP 0 915 556 A2**
(43) Veröffentlichungstag der Anmeldung: **12.05.1999**
(21) Anmeldenummer: 98120409.2
(22) Anmeldetag: 28.10.1998
(51) Int. Cl.: H02K 7/102

(54) **Elektromotor mit Bremse**

(30) Priorität: 10.11.1997 DE 19749608
(71) Anmelder: SIEMENS AKTIENGESELLSCHAFT, 80333 München (DE)
(72) Erfinder: Schwedler, Erhard, Dipl.-Ing. (FH), 97645 Ostheim (DE)

(57) **Zusammenfassung**

Bei einem Elektromotor mit beim Abschalten des Motors automatisch wirkender Bremse wird zur Bremsenluftspaltüberwachung ein Magnetsensor (4) in einen Magnetkörper (1) eingebaut. Bei Ansprechen des Magnetfeldsensors (4) können Meldungen abgesetzt und andere Prozessanlagenteile schaltungstechnisch beeinflußt werden.

## Beschreibung

Die Erfindung betrifft einen Elektromotor mit beim Abschalten des Motors automatisch wirkender Bremse mit einer in axialer Richtung der Rotorwelle des Elektromotors verschiebbaren Ankerscheibe, wobei die Ankerscheibe mit einer Bremsscheibe verbunden ist, und mit einer der Bremsscheibe gegenüberliegenden axial stufenlos verstellbare Bremsfläche, wobei die Ankerscheibe mit Bremsscheibe im ausgeschalteten Zustand des Elektromotors von einer Druckfeder an die Bremsfläche andrückbar ist und wobei im eingeschalteten Zustand des Elektromotors die Ankerscheibe mit Bremsscheibe aufgrund der magnetischen Kräfte einer in einem Magnetkörper angeordneten, separat zugeschaltbaren Spulenwicklung entgegen der Kraft der Druckfeder anziehbar ist.

Durch nicht gelüftete Bremsen eingeschalteter Motoren können durch Wärmeentwicklung an der Reibfläche von Bremsfläche und Bremsscheibe große Schäden entstehen. In allgemein bekannten Ausführungen einer derartigen Bremse ist für die Anzeige des Zustandes der Bremse (gelüftet bzw. nicht gelüftet) ein durch eine Ankerscheibe betätigter Mikroschalter vorgesehen.

Nachteilig bei diesen Mikroschaltern ist, daß durch den mechanischen Verschleiß der Schaltnoppen aufgrund hoher Schalthäufigkeit falsche Zustandsignale der Luftspaltbreite der Bremse abgegeben werden. Außerdem führt Verschmutzung durch den Belagabrieb zu einer Klemmung des Schalters, so daß eine Brandgefahr dadurch nicht ausgeschlossen werden kann. Bei der Montage des Mikroschalters ist außerdem eine umständliche und zeitaufwendige Justage erforderlich.

Bezüglich der Anzeige des Lüftungszustandes beschreibt die europäische Patentschrift EP 0 421 051 A2 ein Verfahren, wie durch Auswertung der Messung des elektrischen Widerstandes zwischen Ankerplatte und Spulengehäuse ein Rückschluß auf den Luftspaltzustand gezogen werden kann. Nachteilig dabei ist, daß durch Schmutzablagerungen in diesem Spalt zwischen Ankerplatte und Spulengehäuse Verfälschungen des elektrischen Widerstandes auftreten.

Aus dem Sonderdruck Siemenszeitschrift (Bremsstrommotoren mit gleichstromerregter Scheibenbremse von Gempel, Schetelig; 48. Jahrgang, 1974, Seite 264 bis 268) ist ein Drehstrommotor mit gleichstromerregter Scheibenbremse bekannt. Nachteilig dabei ist aber die mangelnde Überwachung des Lüftungzustandes der Bremse.

Aus der DE 29 21 032 B1 ist eine Vorrichtung zum Überwachen des Schaltzustandes einer durch Axialverschieben eines Kupplungsteils schaltbaren Kupplung bekannt. Dabei schließt sich ein Magnetkreis über beide Kupplungsteile und es ist ein Sensor zur Abtastung des vom Schaltzustand abhängigen Streufeldes vorgesehen.

Aus der DE 195 10 519 C2 ist außerdem eine Anordnung sowie eine Schaltungsanordnung zur Diagnose, Überwachung und/oder Steuerung von elektromagnetischen Betätigungssystemen, mittels eines Magnetfeldes durchsetzten und Magnetfeld auswertenden Sensors bekannt, der in Verbindung mit einer Ansteuerelektronik ein systemspezifisches Signal abgibt, das einer Auswertelektronik zugeführt wird.

In der DE 42 12 279 A1 wird eine Vorrichtung zur Überwachung des Verschleißes von Bremsbelägen beschrieben, wobei der Verschleißzustand der Bremslänge durch Ausmessen der Position eines zur Bremsanlage gehörenden beweglichen Teiles erfolgt.

Zur Messung weist diese Vorrichtung unter anderem in ein statisches Magnetfeld erzeugendes Element sowie einen magnetempfindlichen Sensor zum Ausmessen auf.

Nachteilig dabei ist u.a. die jeweilige Anordnung des Sensors und der damit verbundene herstellungsbedingte Aufwand zur Fixierung des Sensors.

Der Erfindung liegt die Aufgabe zugrunde, eine beim Abschalten eines Elektromotors automatisch wirkende Bremse zu schaffen, bei der in einfacher, zuverlässiger und kostengünstiger Weise Signale zur Überwachung des Lüftungszustandes herleitbar sind.

Die erfindungsgemäße Lösung der Aufgabe ist gekennzeichnet durch mindestens einen im Magnetkörper befindlichen Magnetfeldsensor, wobei der Magnetfeldsensors in einer Aussparung im Magnetkörper nahe der Spulenwicklung und gegenüber der Ankerscheibe angebracht ist um das Streufeld im Luftspalt zu erfassen und wobei ein Ansprechen des Magnetfeldsensors aufgrund einer Über- oder Unterschreitung einer vorgegebenen magnetischen Feldstärke, die einem vorgegebenen Luftspalt der Bremse entspricht, über einen zugeordneten Schalter eine akustische und/oder optische Meldung absetzt und/oder schaltungstechnisch andere Prozessanlagenteile beeinflußt.

Dadurch, daß ein Magnetfeldsensor an bzw. in einer Aussparung des Magnetkörper angebracht ist, kann zur Ansteuerung des Magnetfeldsensors das Streufeld der in dieser Aussparung des in den Magnetkörper eingelassenen Spule genutzt werden. Durch die Tiefe und Breite der Aussparung ist eine einfache Anpassung an den verwendeten Magnetfeldsensor möglich. Durch Anordnung des Magnetfeldsensors in der Nähe der im Magnetkörper befindlichen Spule können die Anschlüsse des Magnetfeldsensors direkt mit der Wicklung vergossen werden, so daß dadurch weitere Montageschritte eingespart werden. Nach der Festlegung des Maßes der Aussparung des Magnetfeldsensors am Magnetkörper, ist bei Montage dieses Sensors kein mechanischer Abgleich zusätzlich notwendig. Die Erfassung der magnetischen Feldstärke und der daraus abgeleiteten Information des Luftspaltwertes der Bremse kann dazu verwendet werden, weitere an einem Prozeß beteiligte Motoren und Geräte zu- oder abzuschalten. Ein derartig angeordneter Magnetfeldsensor kann auch zur Luftspaltüberwachung von elektromagnetisch betätigten Geräten gemäß DIN VDE 0580 verwendet werden.

Die Erfindung sowie weitere vorteilhafte Ausgestaltungen der Erfindung gemäß den Merkmalen der Unteransprüche werden im folgenden anhand eines schematisch dargestellten Ausführungsbeispiels in der Zeichnung näher erläutert. Darin zeigt:
- FIG 1: den eingebauten Magnetfeldsensor im Magnetkörper,
- FIG 2: eine Schaltung zur Meldung des Zustandes des Bremsenluftspaltes,
- FIG 3: eine Schaltung zur Verhinderung des Motoreinschaltens bei zu großem Bremsenluftspalt.

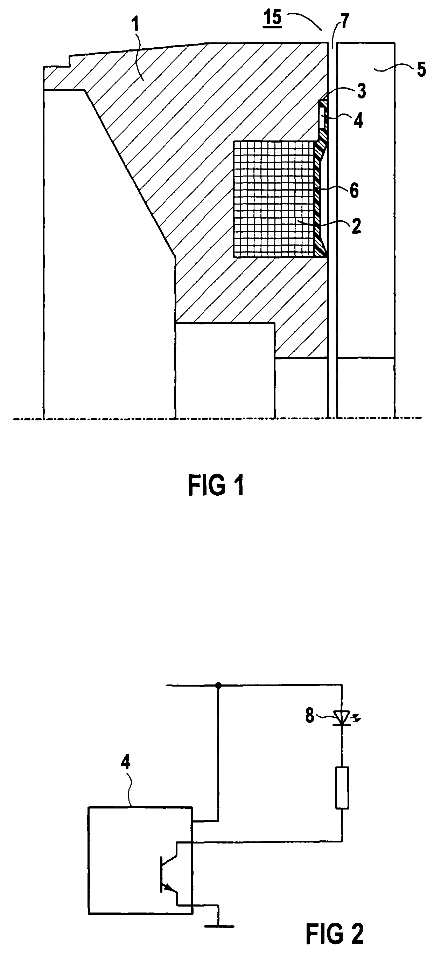

FIG 1 zeigt eine in einem Magnetkörper 1 einer Bremse 15 eines nicht näher dargestellten Elektromotors eingebaute Spulenwicklung 2 und einen in einer Aussparung 3 des Magnetkörpers 1 eingesetzten Magnetfeldsensor 4 gegenüber einer Ankerscheibe 5. Die Ankerscheibe 5 kann aus Lamellem oder Vollmaterial bestehen. Der Magnetfeldsensor 4, der als Hallsensor oder magnetfeldabhängiger Widerstand ausgeführt sein kann, ist zusammen mit der Spulenwicklung 2 durch eine Vergußmasse 6 in seiner Lage fixiert.

FIG 2 zeigt eine Schaltung zur Meldung der Überschreitung des Bremsenluftspaltes 7 , die ein optisches Signal über eine LED 8 bei Überschreiten eines vorgegebenen Bremsenluftspaltwertes abgibt.

Bei einem Bremsenluftspalt 7 von s = 0,2 mm und größer beträgt die magnetische Induktion in der Aussparung 3 B 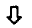 70 mT. Ein Bremsenluftspalt 7 von s = 0 mm, d.h. die Ankerscheibe 5 ist an den Magnetkörper 1 angezogen, beträgt die magnetische Induktion B = 10 mT. Die magnetische Induktion während des Einschaltens beträgt bei dem verwendeten Magnetfeldsensor 4, 24 mT bis 46 mT. Damit ist gewährleistet, daß der Magnetsensor 4 bei einem Bremsenluftspalt 7 von s 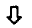 0,2 mm anspricht.

Es sind dabei folgende Betriebsfälle zu unterscheiden:
Betriebsfall I:Spule mit Spulenwicklung 2 nicht erregt (s 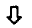 0,2mm) ⇒ B = 0 mT ⇒ keine Meldung (LED 8 aus)
Betriebsfall II:Spule mit Spulenwicklung 2 erregt und s 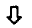 0,2 mm ⇒ B 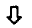 70 mT ⇒ Meldung (LED 8 ein)
Betriebsfall III:Spule mit Spulenwicklung 2 erregt und s < 0,2 mm ⇒ B < 10 mT ⇒ keine Meldung (LED 8 aus).
Die LED 8 leuchtet, wenn die Bremse 15 nicht geöffnet ist. Während der Öffnungsphase(50-300ms) spricht die LED 8 kurz an. Dieses Flackern der LED 8 kann durch ein Zeitrelais mit einer Einstellung von 0,5 s vermieden werden ohne die Betriebssicherheit zu gefährden. Falls, wie in Betriebsfall II geschildert der Bremsenluftspalt 7 zu groß ist und demnach die Bremse 15 nicht mehr geöffnet werden kann, ist es möglich die Bremsfläche axial zu verstellen.

Es sind auch akustische Meldungen oder die Abgabe eines elektrischen Signals für eine Steuerung möglich.

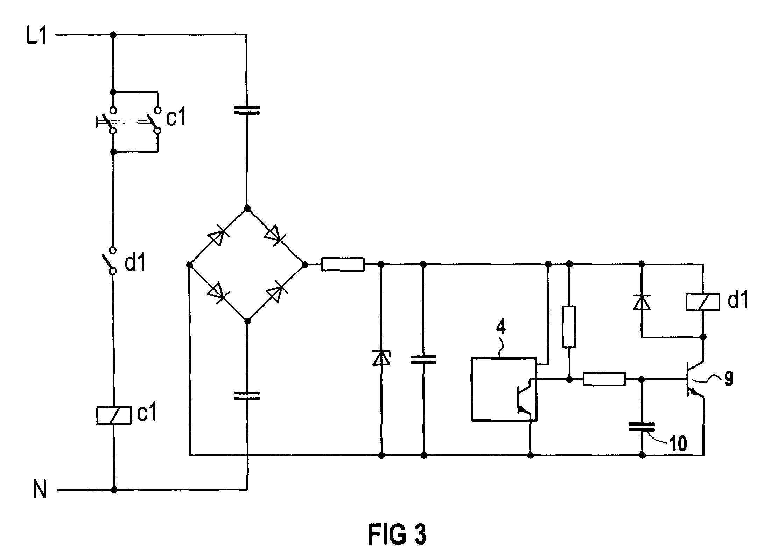

FIG 3 zeigt eine Schaltung, die bei zu großem Bremsenluftspalt 7 eine Einschaltung des Elektromotors gegen eine geschlossene Bremse 15 verhindert. Bei Anlegen einer Netzspannung L1-N baut sich die Versorgungsspannung für den Magnetfeldsensor 4 auf (z.B. 12 V). Die Spulenwicklung 2 der Bremse 15 ist nicht erregt, somit beträgt die magnetische Induktion in der Aussparung 3 des Magnetkörpers 1, d.h. in der Aussparung 3 des Magnetfeldsensors 4 B=0 mT.

Der Magnetfeldsensor 4 gibt ein High-Signal aus und steuert den Transistor 9 durch, dadurch zieht das Hilfsschütz d1 an. Jetzt kann der Elektromotor mit einem Hauptschütz c1 über einen 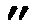 Ein-Taster" Ein eingeschaltet werden. Die Spulenwicklung 2 der Bremse 15 wird erregt, aber die Ankerscheibe 5 der Bremse 15 ist noch nicht angezogen. Der Bremsenluftspalt 7 der Bremse 15 ist s ≥ 0,2 mm, damit beträgt die magnetische Induktion B ≥ 70mT. Der Magnetfeldsensor 4 gibt ein Low-Signal aus und der Kondensator 10 des RC-Gliedes wird entladen. Das RC-Glied verzögert den Abfall des Hilfsschützes d1 und überbrückt somit die Öffnungszeit der Bremse 15.

Die Verzögerungszeit muß dabei größer als die Lüftungszeit der Bremse 15 sein. Zwischenzeitlich (nach der Lüftungszeit) wird die Ankerscheibe 5 der Bremse 15 entgegen der Federkraft einer Druckfeder angezogen (B ≤ 10 mT) und der Magnetfeldsensor 4 gibt ein High-Signal aus. Das Hilfsschütz d1 bleibt angezogen und der Elektromotor bleibt in Betrieb. Falls der Luftspalt zu groß ist, zieht die Ankerscheibe 5 nicht an (B ≥ 70 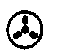 mT) und der Magnetfeldsensor 4 gibt ein Low-Signal aus.

Nach Ablauf der Verzögerungszeit des RC-Gliedes sperrt der Transistor 9 und das Hilfsschütz d1 und damit auch das Hauptschütz c1 fallen ab und setzen den Elektromotor still.In diesem Fall läuft der Elektromotor maximal während der Dauer der Verzögerungszeit gegen die geschlossenen Bremse 15.

In dieser Zeit (Verzögerungszeit) treten noch keine schädlichen Temperaturen an einem Bremsbelag bzw. einer Reibfläche auf.

## Patentansprüche

1. Elektromotor mit beim Abschalten des Motors automatisch wirkender Bremse mit einer in axialer Richtung der Rotorwelle des Elektromotors verschiebbaren Ankerscheibe (5), wobei die Ankerscheibe (5) mit einer Bremsscheibe verbunden ist, und mit einer der Bremsscheibe gegenüberliegenden axial stufenlos verstellbare Bremsfläche, wobei die Ankerscheibe mit Bremsscheibe im ausgeschalteten Zustand des Elektromotors von einer Druckfeder an die Bremsfläche andrückbar ist und wobei im eingeschalteten Zustand des Elektromotors die Ankerscheibe (5) mit Bremsscheibe aufgrund der magnetischen Kräfte einer in einem Magnetkörper (1) angeordneten, separat zugeschaltbaren Spulenwicklung (2) entgegen der Kraft der Druckfeder anziehbar ist, **gekennzeichnet durch**
mindestens einen im Magnetkörper (1) befindlichen Magnetfeldsensor (4), wobei der Magnetfeldsensors (4) in einer Aussparung (3) im Magnetkörper (1) nahe der Spulenwicklung (2) und gegenüber der Ankerscheibe (5) angebracht ist, um das Streufeld im Luftspalt (7) zu erfassen und wobei ein Ansprechen des Magnetfeldsensors (4) aufgrund einer Über- oder Unterschreitung einer vorgegebenen magnetischen Feldstärke, die einem vorgegebenen Luftspalt (7) der Bremse (15) entspricht, über einen zugeordneten Schalter eine akustische und/oder optische Meldung absetzt und/oder schaltungstechnisch andere Prozessanlagenteile beeinflußt.

2. Elektromotor nach Anspruch 1, **dadurch gekennzeichnet,** daß die Anschlüsse des Magnetfeldsensor (4) direkt mit der Spulenwicklung (2) im Magnetkörper (1) vergossen sind.

3. Elektromotor nach einem der vorhergehenden Ansprüche, **dadurch gekennzeichnet,** daß, bei Über- oder Unterschreiten eines vorgegebenen Wertes der magnetischen Feldstärke, die einem gewissen Wert des Bremsenluftspaltes (7) entspricht, weitere Elektromotoren und/oder Geräte nicht zuschaltbar oder abschaltbar sind.
